# EUROPEAN PATENT APPLICATION

(11) **EP 3 515 052 A1**
(43) Date of publication of application: **24.07.2019**
(21) Application number: 18152751.6
(22) Date of filing: 22.01.2018
(51) Int. Cl.: H04M 1/57, H04M 1/663, H04M 1/725

(54) **OPERATING METHOD OF A MOBILE COMMUNICATION DEVICE**

(71) Applicant: TP Vision Holding B.V., 1097 JB Amsterdam (NL)
(72) Inventor: Chakkaravarthi, S.S., Bangalore, Karnataka (IN)
(74) Representative: V.O.

(57) **Abstract**

In an operating method of a mobile communication device, the mobile communication device first establishes a preset short-range wireless communication, and upon the preset short-range wireless communication being established, automatically operates in a specific mode that is associated with the preset short-range wireless communication. When operating in the specific mode, upon receiving a current incoming communication event, the mobile communication device disables a notification of the current incoming communication event.

## Description

The disclosure relates to an operating method of a mobile communication device.

Typically a mobile communication device (e.g., a cell phone, a tablet, etc.) may operate in a number of operation modes. For example, in an airplane mode, certain functionalities such as radio-frequency signal transmissions may be disabled. In a silence mode, outputs of the mobile communication device such as ringtones, sounds and vibrations are disabled.

One object of the disclosure is to provide an operating method of a mobile communication device. According to one embodiment of the disclosure, in the operating method, the mobile communication device first establishes a preset short-range wireless communication, and upon the preset short-range wireless communication being established, automatically operates in a specific mode that is associated with the preset short-range wireless communication.

Other features and advantages of the disclosure will become apparent in the following detailed description of the embodiments with reference to the accompanying drawings, of which:
Figure 1 is a block diagram illustrating a mobile communication device according to one embodiment of the disclosure; and
Figure 2 is a flow chart illustrating steps of an operating method for the mobile communication device according to one embodiment of the disclosure.

Before the disclosure is described in greater detail, it should be noted that where considered appropriate, reference numerals or terminal portions of reference numerals have been repeated among the figures to indicate corresponding or analogous elements, which may optionally have similar characteristics.

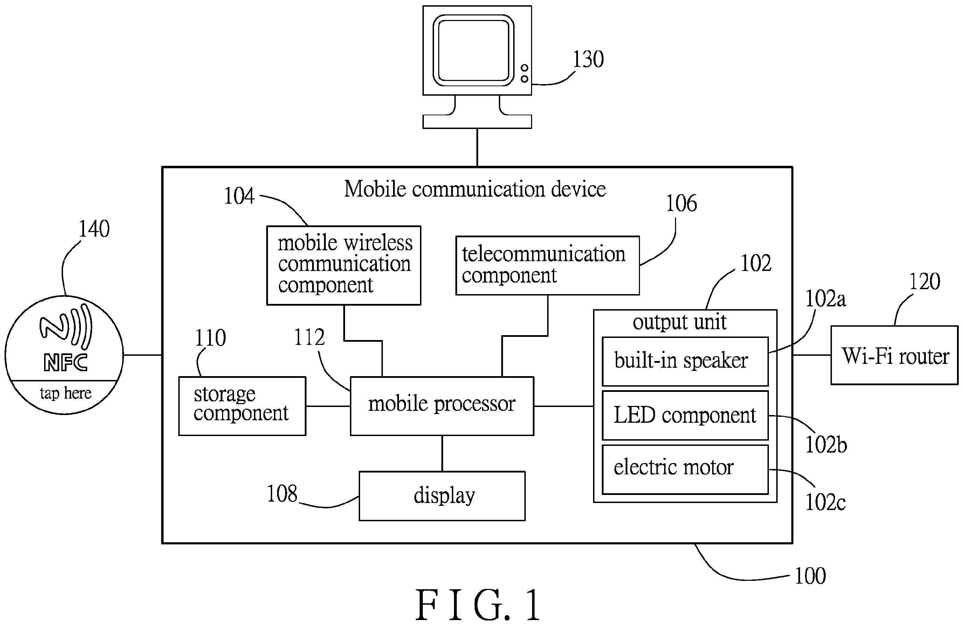

Figure 1 is a block diagram illustrating a mobile communication device 100 according to one embodiment of the disclosure.

The mobile communication device 100 may be embodied using a smart phone, a tablet, a laptop, etc., and includes an output unit 102, a mobile wireless communication component 104, a telecommunication component 106, a display 108, a storage component 110 and a mobile processor 112.

The output unit 102 is for generating detectable (capable of being detected or perceived), visible and/or audible outputs for giving notification to a user of the mobile communication device 100, and may include a built-in speaker 102a, a light-emitting diode (LED) component 102b, and an electric motor 102c for producing vibrations.

The mobile wireless communication component 104 is capable of establishing wireless communication with another electronic device over a short distance, using techniques such as near-field communication (NFC), Bluetooth®, Wi-Fi peer-to-peer (P2P), Wi-Fi hotspot, etc., for data transmission.

The telecommunication component 106 is capable of accessing a cellular network (e.g., GSM, CDMA2000, EV-DO, HSPA+, LTE, etc.) in order to communicate with other electronic devices through the cellular network.

The display 108 may be embodied using a touch screen built in the mobile communication device 100. The storage component 110 may be embodied using a physical data storage (e.g., a flash memory) built in the mobile communication device 100, and stores software applications that are executable by the mobile processor 112.

The mobile processor 112 is coupled to the above-mentioned components of the mobile communication device 100, and is capable of executing the software applications including instructions that, when executed, cause the mobile processor 112 to perform certain operations.

In use, when the mobile communication device 100 is powered on, the mobile processor 112 may execute an operating system (OS). The user may operate the mobile communication device 100 via the display 108 and/or one or more buttons of the mobile communication device 100 (not depicted in the drawings).

The mobile communication device 100 is configured to have a number of preset operation modes, and may be operated in one of the preset operation modes when the OS is being executed. That is to say, the user may manually set the mobile communication device 100 to operate in a desirable one of the operation modes based on an environment he/she is in.

For example, when the user is in an office or is focusing on certain activities (e.g., reading, exercising, watching television, etc.), it may be more preferable to switch the mobile communication device 100 to a silence mode such that a ringtone from an incoming call is disabled. During a flight, the mobile communication device 100 may be set to an airplane mode so as to disable all radio-frequency signal transmissions. In the airplane mode, an "interruption" that takes the form of one or more of a visual notification, an audio notification and vibrations from an incoming communication (such as phone calls, short message service (SMS) messages, emails) will be blocked, and the output unit 102 does not produce any notification until the operation mode is changed.

In the disclosure, a specific mode (which will be referred to as noise free mode throughout the disclosure) is proposed. When switched to the noise free mode, the interruptions may be selectively blocked.

Specifically, a subset of a contact list stored in the mobile communication device 100 may be manually designated as an "important contact" list, and when an incoming communication is received by the mobile communication device 100, the mobile processor 112 first determines whether a source of the incoming communication is listed in the important contact list. When it is determined that the incoming communication is from a contact in the important contact list, the mobile processor 112 controls the output unit 102 to produce a corresponding notification. Otherwise, the mobile processor 112 controls the output unit 102 to not produce the notification.

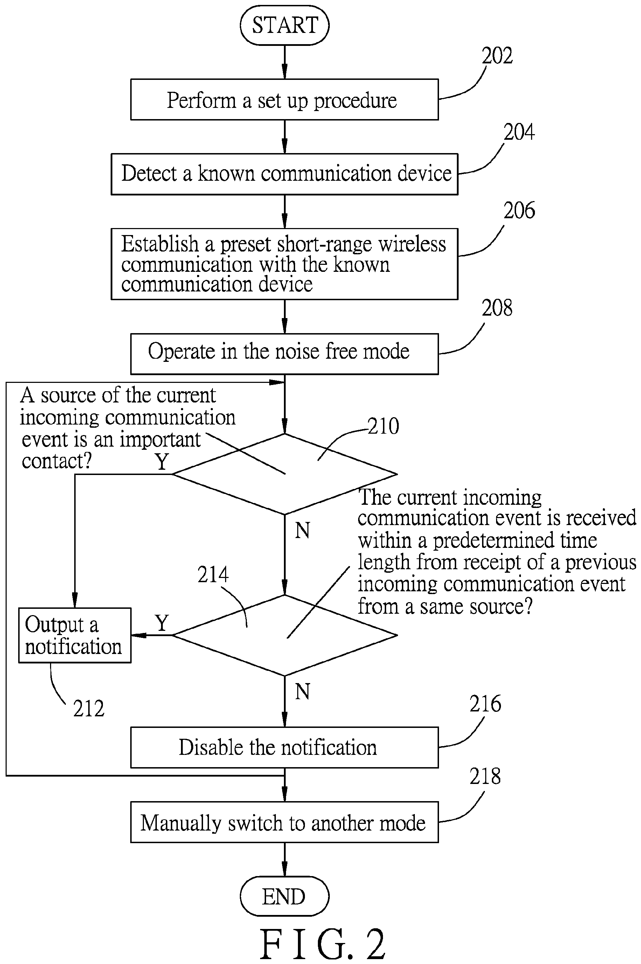

Figure 2 is a flow chart illustrating steps of an operating method for the mobile communication device 100 according to one embodiment of the disclosure. Specifically, the operation method may allow the mobile communication device 100 to automatically switch to the noise free mode when a preset short-range wireless communication associated with the noise free mode is established between the mobile communication device 100 and a known communication device.

In step 202, the user operates the mobile communication device 100 to perform a set up procedure for setting up one or more specific environments/occasions in which the user intends to operate the mobile communication device 100 in the noise free mode.

In one example, when the user is at a specific indoor location (e.g., an office, a classroom, a gym, etc.), he/she may want to filter out unnecessary interruptions while not wanting to miss important communications. As a result of the set up procedure, the mobile processor 112 may automatically switch to the noise free mode when the mobile communication device 100 is connected to a Wi-Fi router 120 (see Figure 1) that is located at the indoor location.

In use, the user may operate the mobile communication device 100 to connect to the Wi-Fi router 120 located at the indoor location, so as to establish a wireless local area network (WLAN) communication between the mobile communication device 100 and the Wi-Fi router 120.

Afterward, in response to user input of an instruction indicating that he/she intends to associate the Wi-Fi router 120 with the noise free mode (i.e., he/she prefers not to be bothered by the unnecessary interruptions when at the indoor location), the mobile processor 112 stores setting data for establishing the WLAN communication with the Wi-Fi router 120 so as to automatically establish the WLAN communication upon detecting the Wi-Fi router 120 (i.e., the Wi-Fi router 120 is now a known communication device) . Further, the mobile processor 112 designates the WLAN communication as the preset short-range wireless communication, and associates the noise free mode with the WLAN communication. The setting data may include a Wi-Fi network name and a password for connecting to the Wi-Fi router 120.

In another example, when the user is using a Bluetooth device (e.g., a television set 130 shown in Figure 1, or other audio/visual playing devices) and intends to set the mobile communication device 100 to the noise free mode (i.e., he/she prefers not to be bothered when using the Bluetooth device), he/she may operate the mobile communication device 100 to pair the mobile communication device 100with the Bluetooth device using a short-range wireless communication technology standard (e.g., Bluetooth®). Afterward, the mobile processor 112 may be programmed to bond with the Bluetooth device (i.e., television set 130) so as to automatically establish a Bluetooth communication with the Bluetooth device upon detecting the Bluetooth device, so that the Bluetooth device is now a known communication device. Similarly, the mobile processor 112 further designates the Bluetooth communication as the preset short-range wireless communication, and associates the noise free mode with the Bluetooth communication.

In yet another example, when the user is in a specific place (e.g., a theater), and intends to set the mobile communication device 100 to the noise free mode (i.e., he/she prefers not to be bothered when in the specific place), he/she may operate the mobile communication device 100 to pair the mobile communication device 100 with a near-field communication (NFC) tag 140 (see Figure 1) that is disposed at the specific place, so as to automatically establish an NFC communication with the NFC tag 140 upon detecting the NFC tag 140, so that the NFC tag 140 is now a known communication device. Similarly, the mobile processor 112 further designates the NFC communication as the preset short-range wireless communication, and associates the noise free mode with the NFC communication.

It is noted that a list of conditions in which the mobile communication device 100 is to be switched to the noise free mode may be edited afterward (i.e., adding entries of specific environment/occasion as described in step 202, or deleting existing entries) . For instance, if the above three examples of the set up procedure are all performed for the mobile communication device 100, there would be a list of three conditions in which the mobile communication device 100 is to be switched to the noise free mode.

In addition, the user may create a list of important contacts including information (e.g., a phone number, an account number of a social media platform or an instant message service, or a combination thereof) associated with one or more contacts.

After the set up procedure, in step 204, the mobile processor 112 controls the mobile wireless communication component 104 to detect a known communication device (i.e., any one of the Wi-Fi router 120, the television set 130 and the NFC tag 140).

Upon detecting any known communication device, in step 206, the mobile processor 112 controls the mobile wireless communication component 104 to establish the preset short-range wireless communication with the known communication device. For example, the mobile wireless communication component 104 may bond with the television set 130 or the NFC tag 140.

In step 208, upon the preset short-range wireless communication being established, the mobile processor 112 controls the mobile communication device 100 to operate in the noise free mode that is associated with the preset short-range wireless communication.

During the mobile communication device 100 operating in the noise free mode, when a current incoming communication event is received by the mobile communication device 100, the mobile processor 112 determines whether a source of the current incoming communication event is preset by the user as an important contact (i.e., whether the source is included in the important contact list) (step 210). When it is determined that the source of the current incoming communication event is an important contact, the mobile processor 112 controls the output unit 102 to output a notification of the current incoming communication event (step 212).

Otherwise, the flow proceeds to step 214, in which the mobile processor 112 determines whether the current incoming communication event is received within a predetermined time length (e.g., 5 minutes) from receipt of a previous incoming communication event that is received from a source identical with that of the current incoming communication event. Namely, the mobile processor 112 determines whether the same source has sent two incoming communication events within the predetermined time length.

When it is determined that the current incoming communication event is not received within the predetermined time length after receipt of another incoming communication event from the same source in step 214, the flow proceeds to step 216, in which the mobile processor 112 disables the notification of the current incoming communication event. In this embodiment, this may be done by silencing the notification (e.g., disabling the built-in speaker 102a and the electric motor 102c), but displaying it using the display 108 or the LED component 102b. In some embodiments, the notification of the current incoming communication event is completely blocked. In some embodiments, the mobile processor 112 may transmit a message notifying the source that the user is currently unavailable.

Otherwise, when it is determined that the current incoming communication event is received within the predetermined time length after receipt of another incoming communication event from the same source in step 214, the flow proceeds to step 212, in which the mobile processor 112 controls the output unit 102 to output the notification of the current incoming communication event.

It is noted that in this embodiment, the user may determine that when someone, who is not an important contact, makes the effort to reach the user more than once in a short period of time, it may be deduced that the someone wants to contact the user due to a matter of importance or urgency. Accordingly, the current incoming communication event (the second attempt from the same party) may be allowed to reach the user. However, in other embodiments, a notification of the incoming communication event that is not coming from one of the important contacts may be disabled, or blocked outright (i.e., step 214 may be omitted, and a negative determination in step 210 leads directly to step 216).

It is noted that the mobile communication device 100 will remain operating in the noise free mode until in step 218, the user manually switches to another mode, or when it is determined that the mobile communication device 100 has been the noise free mode for a predetermine duration (e.g., the duration of a scheduled conference or a television program) or when the preset short-range wireless communication is disconnected (e.g., the mobile communication device 100 leaves a specific area such as the communication range of the Wi-Fi router 120 or the television set 130, a geo-fence, etc.). Accordingly, the method is terminated.

In some embodiments, the mobile communication device 100 may be programmed to provide additional functionalities after switching to the noise free mode. For example, after establishing the preset short-range wireless communication with the television set 130 (e.g., using the Bluetooth® or Wi-Fi communication), the mobile processor 112 may control the display 108 to display a remote control interface, thereby allowing the user to operate the mobile communication device 100 to function as a remote control for the television set 130 for controlling the television set 130.

Afterward, while in the noise free mode, when a current incoming communication event is received and a notification thereof is to be outputted (the source of the current incoming communication event is included in the important contact list or the current incoming communication event is received within the predetermined time length from receipt of a previous incoming communication event from the same source), the mobile processor 112 may transmit a signal to the television set 130 so as to mute the television set 130 and to control the television set 130 to display information associated with the current incoming communication event (a name of the source, a phone number of the source, etc.) thereon.

In some embodiments, when the television set 130 is equipped with the "Timeshift" functionality, while in the noise free mode, when a current incoming communication event is received and a notification of the current incoming communication event is to be outputted, the mobile processor 112 may transmit a signal to the television set 130 so as to control the television set 130 to pause playing of a media content that is currently being played by the television set 130, to output the notification, and to start recording the media content using a recording device (not depicted in the drawings) connected to the television set 130. Accordingly, after termination of the current incoming communication event, the user may operate the mobile communication device 100 to control the television set 130 to resume playing of the media content from a point where the media content was paused upon receipt of the current incoming communication event.

To sum up, embodiments of the disclosure provide a way for the mobile communication device 100 to automatically switch to the noise free mode when in certain conditions (e.g., after a preset short-range communication is established), and to selectively disable notifications that are not associated with the important contacts, thereby reducing interruptions for the user.

In the description above, for the purposes of explanation, numerous specific details have been set forth in order to provide a thorough understanding of the embodiments. It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding various inventive aspects.

## Claims

1. An operating method of a mobile communication device including a step of establishing a preset short-range wireless communication,
**characterized by** a step of, upon establishing the preset short-range wireless communication, automatically operating in a specific mode that is associated with the preset short-range wireless communication.

2. The operating method of Claim 1, the mobile communication device storing setting data used for establishing a wireless local area network (WLAN) communication with a Wi-Fi router so as to automatically establish the WLAN communication upon detecting the Wi-Fi router,
**characterized by** steps, before the step of automatically operating in a specific mode, of designating the WLAN communication as the preset short-range wireless communication, and associating the specific mode with the WLAN communication.

3. The operating method of Claim 1, the mobile communication device being bonded with a Bluetooth device so as to automatically establish a Bluetooth communication with the Bluetooth device upon detecting the Bluetooth device,
**characterized by** steps, before the step of automatically operating in a specific mode, of designating the Bluetooth communication as the preset short-range wireless communication, and associating the specific mode with the Bluetooth communication.

4. The operating method of Claims 1, the mobile communication device being paired with a near-field communication (NFC) tag so as to automatically establishing an NFC communication with the NFC tag upon detecting the NFC tag,
**characterized by** steps, before the step of automatically operating in a specific mode, of designating the NFC communication as the preset short-range wireless communication, and associating the specific mode with the NFC communication.

5. The operating method of Claims 1, **characterized in that** the step of automatically operating in a specific mode includes:
upon receiving a current incoming communication event, disabling a notification of the current incoming communication event.

6. The operating method of Claim 5, **characterized in that** disabling a notification of the current incoming communication event includes silencing the notification.

7. The operating method of Claim 1, **characterized in that** the step of automatically operating in a specific mode includes:
upon receiving a current incoming communication event, determining whether a source of the current incoming communication event is preset as an important contact; and
when it is determined that the source of the current incoming communication event is preset as the important contact, outputting the notification of the current incoming communication event.

8. The operating method of Claim 7, **characterized in that** the step of automatically operating in a specific mode further includes:
when it is determined that the source of the current incoming communication event is not preset as the important contact, determining whether the current incoming communication event is received within a predetermined time length from receipt of a previous incoming communication event from the same source;
when it is determined that the current incoming communication event is not received within the predetermined time length from receipt of the previous incoming communication event from the same source, disabling the notification of the current incoming communication event; and
when it is determined that the current incoming communication event is received within the predetermined time length from receipt of the previous incoming communication event from the same source, outputting the notification of the current incoming communication event.

9. The operating method of Claim 8, the preset short-range wireless communication being one of a Bluetooth and a Wi-Fi communication with a television set,
**characterized in that** the operating method further includes a step of functioning as a remote control for the television set, and the step of outputting the notification of the current incoming communication event includes muting the television set and controlling the television set to display information associated with the current incoming communication event on the television set.

10. The operating method of Claims 7, the preset short-range wireless communication being one of a Bluetooth and a Wi-Fi communication with a television set,
**characterized in that** the operating method further includes a step of functioning as a remote control for the television set, and the step of outputting the notification of the current incoming communication event includes muting the television set and controlling the television set to display information associated with the current incoming communication event on the television set.

11. The operating method of Claim 9, **characterized in that** the step of automatically operating in a specific mode includes making a media content that is currently played by the television set pause and controlling the television set to start recording the media content.
